# EUROPEAN PATENT SPECIFICATION

(11) **EP 3 343 755 B1**
(45) Date of publication and mention of the grant of the patent: **06.12.2023**
(21) Application number: 16207080.9
(22) Date of filing: 28.12.2016
(51) Int. Cl.: H02P 13/00, H01H 47/32

(54) **ELECTRIC APPLIANCE AND METHOD WITH IMPROVED CONTROL OF RELAY ACTIVATION AND DEACTIVATION**
ELEKTRISCHES GERÄT UND VERFAHREN MIT VERBESSERTER STEUERUNG DER RELAISAKTIVIERUNG UND -DEAKTIVIERUNG
APPAREIL ÉLECTRIQUE ET PROCÉDÉ AVEC UNE COMMANDE AMÉLIORÉE D'ACTIVATION ET DE DÉSACTIVATION DE RELAIS

(43) Date of publication of application: 04.07.2018
(73) Proprietor: Electrolux Appliances Aktiebolag, 105 45 Stockholm (SE)
(72) Inventor: VITALI, Fabio, 33080 Porcia (IT)
(74) Representative: Electrolux Group Patents

(56) References cited:
- EP-A2- 1 146 532
- DE-A1- 4 117 535
- DE-A1- 19 516 995
- US-A1- 2012 106 021
- US-B1- 6 934 140

## Description

### Field of the invention

The present invention generally relates to electric appliances, such as washing, drying, washing/drying, dishwashing appliances, both for domestic and professional use. More particularly, the present invention relates to a circuit system for controlling activation and deactivation of electromechanical devices (*e.g.*, relays) in such electric appliances.

### Background of the invention

Nowadays most of electric appliances, hereinafter appliances, make use of a number of electric loads (such as electric heaters, drain or recirculation pumps, light sources, electric motors, and fans) for performing one or more treatment programs.

In order to allow selective energization and de-energization of the electric loads, each appliance typically comprises a number of electromechanical devices *(e.g.,* relays) for electrically coupling and decoupling the electric loads to respective supply sources thereby allowing said electric load energization and de-energization, respectively.

According to relay principles of operation, a current flowing through a relay coil actuates *(i.e.,* closes or opens) a pair of relay contacts (thereby causing relay activation or deactivation, respectively).

However, a missed actuation or a spurious *(i.e.,* undesired) actuation of the relay contacts may impair appliance operation. In order to face this issue, most of prior-art solutions are based on the common approach of detecting a current (activated or activated) state of the relay during execution of a treatment program.

US2012/106021 discloses methods and apparatus providing for: at least one electromechanical relay including a coil and at least one pair of contacts, the contacts transitioning between a de-energized state and an energized state in response to current through the coil; a microcontroller having at least one tri-state output operating to produce ON, OFF, and FLOAT states; and a driver circuit operating, in conjunction with the tri-state output of the microcontroller, to control the current through the coil of the relay such that: (i) a transition of the tri-state output from OFF to FLOAT maintains the contacts of the relay in their de-energized state through the transition, and (ii) a transition of the tri-state output from ON to FLOAT maintains the contacts of the relay in their energized state through the transition.

US6934140 discloses a frequency-controlled load driver circuit including a steady-state and a transient operational mode. A switching driver switches a load current to a solenoid at a set switching frequency during a steady-state operational mode. An analog-to-digital converter (ADC) oversamples a sense resistor voltage an integer number of times within each period of the switching frequency. A control circuit sets the switching frequency of the driver during the steady-state operational mode by providing predetermined switching times. The control circuit disables switching during the transient mode. Dither can be applied during the steady-state mode.

### Summary of invention

The Applicant has realized that the none of the prior-art solutions provides correct and efficient control of relay activation and deactivation.

The Applicant has noticed that each relay is typically designed for a fairly specific range of driving voltages. By way of example, for a relay designed to operate at a nominal driving voltage, the actual driving voltage may range from a lower driving voltage, below which the current through the relay coil may be too small to close the relay contacts (or may cause the relay contacts to close intermittently and "chatter"), to a higher driving voltage, above which the increased current through the relay coil may cause overheating or relay coil burn-out.

According to the Applicant, this uncertainty about the actual driving voltage of the relay makes control of relay activation and deactivation difficult, and hence prone to errors.

In addition, the actual driving voltages of the relays may vary over time *(e.g.,* due to wearing and/or malfunctioning affecting the electromechanical properties of the relay(s)), or may suffer from specific operating conditions of the appliance *(e.g.* mechanical vibrations caused by appliance operation), which make this uncertainty even more serious.

Last but not least, each relay typically features *(i.e.,* it is responsive to) different driving voltages for different relay operating state, for example a driving voltage that allows relay activation (or activation driving voltage) in an activation state, and a driving voltage that allows the relay to keep *(i.e.,* to hold) activation (or hold driving voltage) in a hold state - the hold driving voltage being typically lower than the activation driving voltage, and a voltage below the hold driving voltage determining relay deactivation.

Aside from making control of relay activation and deactivation even more difficult, these differentiated driving voltages determine a non-negligible waste of electric power. Indeed, when, as in most of the prior-art solutions, the activation driving voltage is applied for both activation and hold state, the current through the relay coil during the hold state is greater than required, which could cause overheating, and affect reliability and lifetime of the relay.

In view of the above, it is an object of the present invention to provide an appliance having a circuit system for correctly and efficiently controlling relay activation and deactivation.

An electric appliance according to the invention is described in claim 1 and a method according to the invention is disclosed in claim 8. Preferred embodiments are disclosed in claims 2 to 7 and respectively 9.

### Brief description of the annexed drawings

These and other features and advantages of the present invention will be made apparent by the following description of some exemplary and non-limitative embodiments thereof; for its better intelligibility, the following description should be read making reference to the attached drawings, wherein:
**Figure 1** shows a perspective view of an appliance wherein the present invention may be applied, and
**Figure 2** schematically shows a portion of a circuit system of the appliance according to an embodiment of the present invention.

### Detailed description of preferred embodiments of the invention

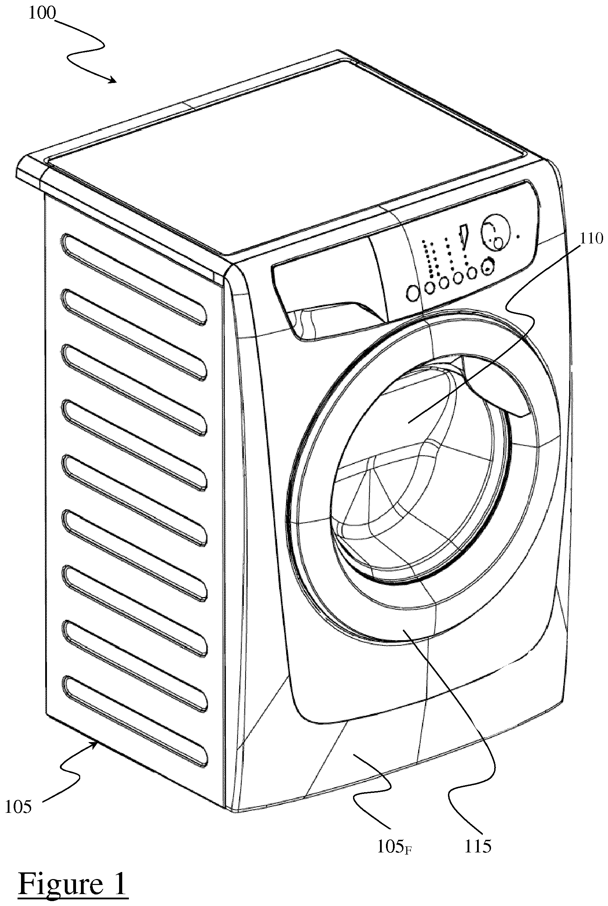

Referring now to the drawings, **Figure 1** schematically shows an electric appliance (or appliance) **100,** for example for domestic use, wherein the present invention may be applied. The appliance **100** may for example be a laundry washing appliance intended to perform laundry washing operations, a laundry drying appliance intended to perform laundry drying operations, or (as herein assumed by way of example only) a laundry washing/drying appliance intended to perform both laundry washing and laundry drying operations. However, as will be better understood from the following description, the present invention lends itself to be applied to any appliance, for domestic or professional treatment of items, making use of one or more electromechanical switches.

The appliance **100** preferably comprises a substantially parallepiped-shaped cabinet **105,** which encloses an inner compartment.

In the exemplarily considered appliance **100** (which is intended to perform both laundry washing and laundry drying operations), the inner compartment accommodates a tub (not visible), adapted to be filled with washing liquids, and a *(e.g.,* perforated) rotatable drum **110** mounted therein (in either a horizontal or vertical orientation) adapted to house the laundry to be treated *(i.e.,* the laundry to be washed and/or dried, in the example at issue). Anyway, according to the considered appliance (and, hence, according to the treatment the appliance is intended/designed to perform and the items the appliance is intended/designed to treat), the inner compartment may accommodate, instead of the tub and the rotatable drum **110,** any suitable treatment chamber.

The inner compartment (and the rotatable drum **110**) is accessible through an access door **115** (shown in a closed configuration), preferably provided on a front face **105**_{F} of the cabinet **105** for loading/unloading the laundry.

The inner compartment also accommodates, not visible in such a figure, a number of well-known electronic, electrohydraulic and/or electromechanical components, which form (as a whole) a circuit system allowing operation of the appliance **100.**

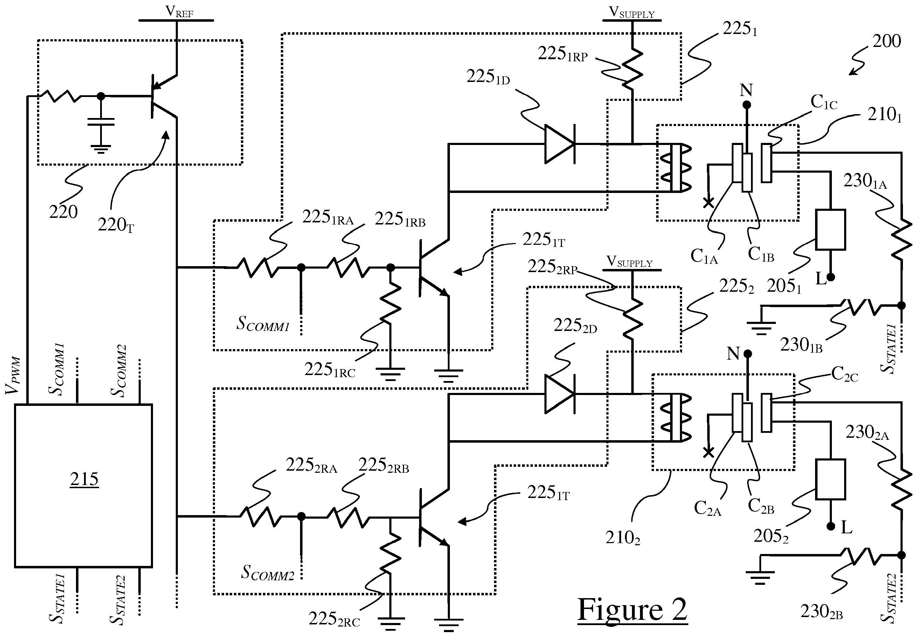

Hereinafter, reference will be also made to **Figure 2****,** which schematically shows a portion of a circuit system **200** according to an embodiment of the present invention. In the following, in order to encompass possible circuit system variants, all falling within the scope of the present invention, the term coupling will be used for denoting both direct and indirect coupling (unless explicitly referring to direct or indirect coupling, whenever relevant).

The circuit system **200** comprises one or more *(e.g.,* two) electric loads, such as the electric loads **205₁,205₂.** Without losing generality, the electric loads **205₁,205₂** may comprise one or more among electric heaters *(e.g.,* for washing liquids and/or drying air heating), drain or recirculation pumps *(e.g.,* for draining or recirculating the washing liquids), light sources *(e.g.,* for visually informing the user about the appliance operation), electric motors (such as electric motors for drum rotation and/or for recirculation pump operation), and fans *(e.g.,* for electric motors cooling).

The circuit system **200** also comprises one or more *(e.g.,* two) electromechanical switches (*e.g.*, relays) **210₁,210₂** for selectively coupling and decoupling the electric loads **205₁,205₂** to respective supply sources of the appliance **100** (thereby allowing electric load energization and de-energization, respectively), a driving arrangement for driving the relays **210₁,210₂** between activated (or energized) and deactivated (de-energized) states thereby allowing said energization and de-energization of the electric load **205₁,205₂,** respectively, and a control unit **215,** for example a microcontroller/microprocessor, for controlling driving arrangement operation. As typical in modern laundry appliances, the control unit **215** is preferably intended to manage the whole appliance operation; however, for the sake of conciseness, only aspects/functionalities of the control unit **215** relevant for the present invention (and, specifically, pertaining to driving arrangement control) will be introduced and discussed in the following.

In the illustrated, not limiting, embodiment, each relay **210₁,210₂** is functionally associated with a respective electric load **205₁,205₂.** This may be advantageous when the electric loads **205₁,205₂** need to be energized (independently) at different steps of a treatment program carried out by the appliance **100,** such as an electric heater and a drain pump (indeed, when the electric heater is energized for heating the washing liquids thereby carrying out a washing step, the drain pump needs to be de-energized; at the end of the washing step, when the drain pump is energized for discharging the washing liquids, the electric heater needs to be de-energized).

Anyway, embodiments may also be provided wherein one or more of the relays are functionally associated each one with a respective plurality of *(i.e.,* two or more) electric loads. This may be advantageous in case of electric loads intended to be energized concurrently at same steps of a treatment program carried out by the appliance **100,** such as an electric heater heating the washing liquids during the washing step and *(e.g.,* a subset of) the light sources indicating the ongoing washing step (indeed, when the electric heater is energized for heating the washing liquids during the washing step, the light sources need to be energized for signaling that; at the end of the washing step, when the electric heater is de-energized, the electric heater needs to be de-energized too, so as to visually signal the user about the end of the washing step).

As mentioned above, the relays **210₁,210₂** are intended to selectively couple and decouple the electric loads **205₁,205₂** to respective supply sources of the appliance **100.** The supply sources may differentiate from each other for supply source type *(e.g.,* DC or AC) and/or value.

In the illustrated, not limiting, embodiment, each relay **210₁,210₂** is arranged for selectively coupling and decoupling the respective electric load **205₁,205₂** to a same supply source. According to an embodiment of the present invention, the supply source is an AC supply voltage from supply terminals (*e.g.*, line **L** and neutral **N** terminals) of an AC power supply. For the purposes of the present invention, the line **L** and neutral **N** terminals are connected, respectively, to the electric load **205₁,205₂** and to a relay **210₁,210₂** contact (as better discussed here below); in any case, it should be understood that the line **L** and neutral **N** terminals may also be connected to other portions of the circuit system **200.**

Preferably, as illustrated, the circuit system **200** also comprises a DC supply voltage, hereinafter referred to as supply voltage *V_{SUPPLY}*, provided at a supply terminal **V_{SUPPLY}.** For example, the supply voltage *V_{SUPPLY}* may be a voltage of 5V, 9V, 12V, 24V, or 48V with respect to a reference voltage (for example a ground voltage *GND*, *e.g.* 0V) - the terminal providing the ground voltage, or ground terminal, being represented in the figure by its conventional electrical symbol. Although not shown, the supply *V_{SUPPLY}* and ground *GND* voltages are preferably obtained by power conversion of the AC supply voltage from line **L** and neutral **N** terminals of the AC power supply.

According to the considered electric loads **205₁,205₂,** each electric load **205₁,205₂** (or at least a part thereof) may also be associated with a respective (AC or DC) supply source (e.g., different from at least part of the supply sources associated with the other electric loads).

Preferably, as illustrated, each relay **210₁,210₂** comprises respective contacts **C_{1A},C_{1B},C_{1C}, C_{2A},C_{2B},C_{2B}** and a relay coil *(e.g.,* a coil of wire wrapped around an iron core) electrically coupled to the driving arrangement.

A central contact of each relay **210₁,210₂,** *e.g.* the contact **C_{1B},C_{2B}** in the figure, is movable with respect to *(i.e.,* it can be actuated towards) the other, or fixed (mechanically separated and electrically insulated) side contacts of the same relay *(i.e.* the side contacts **C_{1A},C_{2A}** and **C_{1C},C_{2C}** in the example at issue).

In the exemplary illustrated embodiment, the side contact **C_{1A},C_{2A}** of each relay **210₁,210₂** is floating, the side contact **C_{1C},C_{2C}** of each relay **210₁,210₂** is electrically coupled to the respective electric load **205₁,205₂** and, preferably, to a sensing arrangement (as discussed in the following). Preferably, the central contact **C_{1B},C_{2B}** is electrically coupled to the neutral terminal **N** of the AC power supply - in any case, according to specific design options, electrical coupling of the central contact **C_{1B},C_{2B}** to other terminals may be envisaged.

In absence of electric current across the relay coil, the central contact **C_{1B},C_{2B}** of each relay **210₁,210₂** is electrically coupled to a respective side contact, *e.g.* the contact **C_{1A},C_{2A}** (and an air gap, and hence electrical insulation, is established between the central contact **C_{1B},C_{2B}** and the opposite side contact **C_{1C},C_{2C}**). When instead an electric current is passed through the relay coil, a magnetic field is generated that enables movement/actuation of the central contact **C_{1B},C_{2B}** from the side contact **C_{1A},C_{2A}** to the respective side contact **C_{1C},C_{2C}** (until mechanical and electrical contacting is established therebetween). Thus, in the considered embodiment, each relay **210₁,210₂** takes a first, deactivated, state wherein the central contact **C_{1B},C_{2B}** contacts the respective side contact **C_{1A},C_{2A}** so that no electrical coupling between the respective electric load **205₁,205₂** and AC supply voltage takes place *(i.e.,* with the electric load **205₁,205₂** that is not connected to the neutral terminal **N**), and is operable in a second, activated, state wherein the central contact **C_{1B},C_{2B}** contacts the respective side contact **C_{1C},C_{2C}** thereby allowing the electrical coupling between the respective electric load **205₁,205₂** and the AC supply voltage *(i.e.,* with the electric load **205₁,205₂** that is connected between the line **L** and neutral **N** terminals).

The driving arrangement is configured to drive each selected relay **210₁,210₂** (*i.e.,* each relay whose associated electric load **205₁,205₂** has to be energized during an ongoing treatment program) by means of a driving signal whose average value can be modulated *(i.e.,* whose average value can be dynamically adjusted) - according to embodiments of the present invention, discussed below, the modulation of the driving signal takes place according to the relay (activated or deactivated) state, and/or according to changes in the electrical responsivity (*e.g*., voltage responsivity) affecting the relay due to wearing and/or malfunctioning). Preferably, the driving signal is a "*Pulse-Width Modulated*" signal.

According to pulse-width modulation principles, the average value of the electric voltage (and current) fed to the relay coil is controlled by powering and unpowering it at a fast rate - the longer the powering time with respect to the unpowering time over a certain time period, the higher the total power supplied to the relay coil. In this context, the term duty cycle denotes the proportion (*e.g.*, expressed in percent) of the powering time to the time period, so that low and high duty cycles correspond, respectively, to low and high powers fed to the relay coil.

The use of a "*Pulse-Width Modulated*" signal provides power saving while ensuring correct driving of the relays **210₁,210₂.** Indeed, the PWM signal can be advantageously set with a first duty cycle resulting *(i.e.,* such that the corresponding PWM signal results) in a first driving voltage at the relay **210₁,210₂** corresponding exactly to that required to switch the relay **210₁,210₂** into the activated state (in the following, the first duty cycle and the first driving voltage being referred to as activation duty cycle and activation driving voltage, respectively), and/or with a second duty cycle, *e.g.* lower than the first duty cycle, resulting *(i.e.,* such that the corresponding PWM signal results) in a second driving voltage at the relay **210₁,210₂** corresponding exactly to that required to hold the relay **210₁,210₂** in the activated state (in the following, the second duty cycle and the second driving voltage being referred to as hold duty cycle and hold driving voltage, respectively). This is inspired by the feature of most of known relays to hold the activated state with a hold driving voltage that (nominally, *i.e*. malfunctioning aside) is lower than the activation driving voltage (or, other stated, by the feature of most of known relays of being responsive to an activation driving voltage at or above which they are switched into the activated state, and to a hold driving voltage, lower than the activation driving voltage, at or above which they are held in the activated state).

According to the preferred embodiment herein considered, the PWM signal is a PWM voltage. In this respect, the circuit system **200** preferably comprises a PWM generator arranged for generating a PWM voltage *V_{PWM}* and for feeding it to the driving arrangement - according to the principles of the present invention, the driving arrangement being in turn configured to feed each selected relay **210₁,210₂** with the respective activation or hold driving voltages derived from the PWM voltage *V_{PWM}.* As better understood in the following while discussing the operation of the circuit system **200,** the PWM generator and the driving arrangement identify, as a whole, a switching arrangement for switching each selected relay **210₁,210₂** into the deactivated state from the activated state, into the activated state from the deactivated state, or into an hold state after activation has taken place.

The PWM generator function may for example be accomplished by a dedicated unit (not shown) or, as in the exemplary illustrated embodiment, by (a suitable section of) the control unit **215** - the PWM voltage *V_{PWM}* being for example output from a suitable pin (hereinafter referred to as PWM pin) of the control unit **215.**

Preferably, as herein exemplary discussed, the driving arrangement is configured to selectively feed each selected relay **210₁,210₂** with same activation and hold driving voltages derived from the same PWM voltage *V_{PWM}* - anyway, a PWM voltage *V_{PWM}* and/or activation and hold driving voltages different *(e.g.,* for type and/or value) for each relay **210₁,210₂** (or for each set of one or more relays) might also be provided (*e.g.*, according to electromechanical properties of the relay/relays **210₁,210₂** to be driven).

Preferably, as visible in the figure, the driving arrangement comprises a number of relay coil drivers. More preferably, the relay coil drivers comprise a shared relay coil driver **220** arranged for receiving the PWM voltage *V_{PWM},* and a number of *(e.g.,* two in the example at issue) dedicated relay coil drivers **225₁,225₂** each one electrically coupled to the shared relay coil driver **220** - as should be readily understood, in embodiments of the present invention wherein two or more electric loads are intended to be driven together, a different number of dedicated relay coil drivers as compared to the number of electric loads may be envisaged. The shared relay coil driver **220** defines, together with each dedicated relay coil driver **225₁,225₂,** a two-stage section of the circuit system **200** aimed at providing the activation and hold driving voltages across the respective relay coil thereby allowing activation and activation holding, respectively, of the relay **210₁,210₂.**

As visible in the figure, each dedicated relay coil driver **225₁,225₂** is also arranged to receive a respective command signal *S_{COMM1}*,*S_{COMM2}*, preferably from a respective pin (hereinafter, command pin) of the control unit **215** - as better discussed in the following, each command signal *S_{COMM1}*,*S_{COMM2}* allows commanding the activation, the activation holding or the deactivation of the respective relay **210₁,210₂.** According to an embodiment of the present invention, the command signal *S_{COMM1}*,*S_{COMM2}* can take a high logic level *(e.g.,* associated with the supply voltage *V_{SUPPLY}*), or a low logic level *(e.g.,* associated with the ground voltage, and resulting in a low-impedance state of the corresponding command pin), or a tristate level *(e.g.,* corresponding to a high impedance of the respective command pin).

According to the principles of the present invention, the switching arrangement is arranged for switching the relay **210₁,210₂** according to a combination between the command signal *S_{COMM1}*,*S_{COMM2}* and the PWM signal *(i.e.,* the PWM voltage *V_{PWM}* in the example at issue). Broadly speaking, the duty cycle of the PWM signal is such that:
- at a first level of the command signal *S_{COMM1}*,*S_{COMM2} (e.g.* the high logic level or the tristate level, according to different embodiments discussed below), the PWM voltage *V_{PWM}* combined with the command signal *S_{COMM1}*,*S_{COMM2}* results in a driving voltage at the relay **210₁,210₂** at least equal to the activation driving voltage, whereby the relay **210₁,210₂** is switched into the activated state;
- at a second level of the command signal *S_{COMM1}*,*S_{COMM2} (e.g.* the tristate level) the PWM voltage *V_{PWM}* combined with the command signal *S_{COMM1}*,*S_{COMM2}* results in a driving voltage at the relay **210₁,210₂** between said activation and hold driving voltages (*i.e.*, at least equal to the hold driving voltage and lower than the activation driving voltage), whereby the relay **210₁,210₂** is held in the activated state, and preferably
- at a third level of the command signal *S_{COMM1}*,*S_{COMM2} (e.g.* the low-logic level in the preferred implementation of the driving arrangement discussed in the following), the PWM voltage *V_{PWM}* is prevented from being fed to the relay **210₁,210₂,** whereby the relay **210₁,210₂** is switched into the deactivated state.

In the following, reference will be made to two main (not limitative) embodiments for the driving of the relay **210₁,210₂** (hereinafter referred to as first and second driving embodiments). As discussed below, the first and second driving embodiments differ from each other for the combinations of the PWM voltage *V_{PWM}* with the command signal *S_{COMM1}*,*S_{COMM2}* used for managing the (activation, deactivation or holding) of the relay **210₁,210₂.**

According to the first driving embodiment, the PWM voltage *V_{PWM}* is set at the hold duty cycle for both activation and holding of the relay **210₁,210₂.**

More particularly, according to this embodiment:
- in order to switch the relay **210₁,210₂** into the activated state, the command signal *S_{COMM1}*,*S_{COMM2}* is set at the high logic level and the PWM voltage *V_{PWM}* is set at the hold duty cycle. In this way, the PWM voltage *V_{PWM}* combined with the command signal *S_{COMM1}*,*S_{COMM2}* at the high logic level results in a driving voltage at the relay **210₁,210₂** at least equal to the activation driving voltage (due to the shifting effect of the command signal *S_{COMM1}*,*S_{COMM2}* on the PWM voltage *V_{PWM}*)*.* The use of the PWM voltage *V_{PWM}* set at the hold duty cycle allows reducing the energy/power consumption required to switch the relay **210₁,210₂** into the activated state (indeed, the high logic level of the command signal *S_{COMM1}*,*S_{COMM2}* advantageously acts for a short period of time, *e.g.* for the period of time strictly required to switch the relay **210₁,210₂** into the activated state, such that the power consumption given by the combination of the PWM voltage *V_{PWM}* with the command signal *S_{COMM1}*,*S_{COMM2}* is certainly lower than that given by the direct application of a DC driving voltage equal to the activation driving voltage, as in the known solutions);
- in order to hold the relay **210₁,210₂** in the activated state, the command signal *S_{COMM1}*,*S_{COMM2}* takes the tristate level (with the PWM voltage *V_{PWM}* that is kept at the hold duty cycle). In this way, the PWM voltage *V_{PWM}* results in a driving voltage at the relay **210₁,210₂** equal to the hold driving voltage (indeed, in this case, the PWM voltage is passed to the relay **210₁,210₂** substantially unaffected by the command signal *S_{COMM1}*,*S_{COMM2}*)*.* In any case, in alternative embodiments, the PWM voltage *V_{PWM}* at the hold duty cycle could result in a driving voltage at the relay **210₁,210₂** between the hold and activation driving voltages, according to the specific circuit implementation and/or to the PWM voltage *V_{PWM}* setting or sizing, and/or to the logic level of the command signal *S_{COMM1}*,*S_{COMM2} (e.g.,* in case that the first logic level is a voltage level between the high and low logic levels). The use of the PWM voltage *V_{PWM}* set at the hold duty cycle allows reducing the energy/power consumption required to keep the relay **210₁,210₂** into the activated state (indeed, the power consumption given by the PWM voltage *V_{PWM}* at the hold duty cycle is certainly lower than that given by the direct application of a DC driving voltage equal to the hold driving voltage, as in the known solutions);
- in order to switch the relay **210₁,210₂** into the deactivated state, the command signal *S_{COMM1}*,*S_{COMM2}* is set at the low logic level. In this way, irrespective of the duty cycle of the PWM voltage *V_{PWM},* the PWM voltage *V_{PWM}* is prevented from being fed to the relay **210₁,210₂.** In this way, selective deactivation of each relay **210₁,210₂** can be achieved.

According to the second driving embodiment, the PWM voltage *V_{PWM}* is set at the activation duty cycle for activation of the relay **210₁,210₂** and at the hold duty cycle for holding the relay **210₁,210₂** in the activated state.

More particularly, according to this embodiment:
- in order to switch the relay **210₁,210₂** into the activated state, the command signal *S_{COMM1}*,*S_{COMM2}* is set at the tristate level and the PWM voltage *V_{PWM}* is set at the activation duty cycle. In this way, the PWM voltage *V_{PWM}* results in a driving voltage at the relay **210₁,210₂** equal to the activation driving voltage (indeed, in this case, the PWM voltage is passed to the relay **210₁,210₂** substantially unaffected by the command signal *S_{COMM1}*,*S_{COMM2}*) or, in any case, above the activation driving voltage (depending on the specific circuit implementation and/or on the PWM voltage *V_{PWM}* setting or sizing). The use of the PWM voltage *V_{PWM}* set at the activation duty cycle allows reducing the energy/power consumption required to switch the relay **210₁,210₂** into the activated state with respect to that given by the direct application of a DC driving voltage equal to the activation driving voltage, as in the known solutions). With respect to the previous embodiment, which makes use of the PWM voltage *V_{PWM}* at the hold duty cycle and of the command signal *S_{COMM1}*,*S_{COMM2}* at the high logic level, a substantially equal power consumption may be assumed (indeed, in the present embodiment, the command signal *S_{COMM1}*,*S_{COMM2}* adds no contribution to power consumption, differently from the first driving embodiment);
- in order to hold the relay **210₁,210₂** in the activated state, the PWM voltage *V_{PWM}* is set with the hold duty cycle (with the command signal *S_{COMM1}*,*S_{COMM2}* that is kept at the tristate level). In this way, the PWM voltage *V_{PWM}* results in a driving voltage at the relay **210₁,210₂** equal to the hold driving voltage (indeed, in this case, the PWM voltage is passed to the relay **210₁,210₂** substantially unaffected by the command signal *S_{COMM1}*,*S_{COMM2}*) or, in any case, between the hold and activation driving voltages (depending on the specific circuit implementation and/or on the PWM voltage *V_{PWM}* setting or sizing). As discussed for the first driving embodiment, the use of the PWM voltage *V_{PWM}* set at the hold duty cycle allows reducing the energy/power consumption required to keep the relay **210₁,210₂** into the activated state (indeed, the power consumption given by the PWM voltage *V_{PWM}* at the hold duty cycle is certainly lower than that given by the direct application of a DC driving voltage equal to the hold driving voltage, as in the known solutions);
- in order to switch the relay **210₁,210₂** into the deactivated state, the command signal *S_{COMM1}*,*S_{COMM2}* is set at the low logic level. In this way, irrespective of the duty cycle of the PWM voltage *V_{PWM},* the PWM voltage *V_{PWM}* is prevented from being fed to the relay **210₁,210₂.** In this way, selective deactivation of each relay **210₁,210₂** can be achieved.

As should be understood, the effects of the high and low logic levels and of the tristate level on the relay **210₁,210₂** discussed in connection with the above first and second driving embodiments are merely indicative and derive from the exemplary practical implementation of the shared **220** and dedicated **225₁,225₂** relay coil drivers discussed here below.

According to an embodiment of the present invention, the common relay coil driver **220** comprises a "*Bipolar Junction Transistor*" (BJT) transistor (hereinafter, shared transistor) **220_{T},** for example in "common emitter" configuration. In this configuration, the emitter terminal of the shared transistor **220_{T}** is electrically coupled to a reference terminal **V_{REF}** providing a reference voltage *V_{REF}* (for example, 3-5V with respect to the ground voltage *GND*), the gate terminal of the BJT transistor **220_{T}** is electrically coupled to the PWM pin of the control unit **215** for receiving the PWM voltage *V_{PWM}* (or, in the considered advantageous example, a filtered version thereof), and the collector terminal of the shared transistor **220_{T}** is electrically coupled to the dedicated relay coil driver **225₁,225₂.**

As just mentioned, a filtering arrangement is provided between the gate terminal of the shared transistor **220_{T}** and the PWM pin of the control unit **215** for suppressing possible disturbances from *(i.e.,* associated with) the PWM voltage *V_{PWM}.* Preferably, the filter arrangement comprises a low-pass filter, for example a passive low-pass filter. Even more preferably, as illustrated, the low-pass filter is a low-pass RC filter.

According to an embodiment of the present invention, each dedicated relay coil driver **225₁,225₂** comprises a BJT transistor (hereinafter, dedicated transistor) **225_{1T},225_{2T},** for example in "common emitter" configuration. In this configuration, the emitter terminal of the dedicated transistor **225_{1T},225_{2T}** is electrically coupled to the ground terminal, the gate terminal of the dedicated transistor **225_{1T},225_{2T}** is electrically coupled to the collector terminal of the shared transistor **220_{T}** *(e.g.* by means of a resistive network, as discussed below), and the collector terminal of the dedicated transistor **225_{1T},225_{2T}** is electrically coupled to a first end of the respective relay coil. The second, opposite end of each relay coil is instead electrically coupled to the supply terminal **V_{SUPPLY}** (e.g., by interposition of one or more current-limiting components, such as the current-limiting resistor **225_{1RP},225_{2RP},** for limiting the electric current across the relay coil to a predefined upper limit).

Preferably, as illustrated, the second end of each relay coil is also electrically coupled to the collector terminal of the dedicated transistor **225_{1T},225_{2T}** by interposition of one or more protection components. Even more preferably, the protection components comprise one (as illustrated) or more so called freewheeling diodes, such as the freewheeling diode **225_{1D},225_{2D},** aimed at protecting the relay coil against large and destructive voltage spikes (indeed, the freewheeling diode **225_{1D},225_{2D}** takes the energy stored in the relay coil when the electric current across it is switched off; without it, the energy would have no place to go and will cause voltage spikes).

Preferably, as illustrated, each dedicated relay coil driver **225₁,225₂** comprises a coupling network, for example a resistive coupling network, for electrically coupling the gate terminal of the dedicated transistor **225_{1T},225_{2T}** to the collector terminal of the shared transistor **220_{T}.** According to the illustrated embodiment, the resistive coupling network comprises a first **225_{1RA},225_{2RA},** second **225_{1RB},225_{2RB}** and third **225_{1RC},225_{2RC}** resistors (hereinafter referred to as first **225_{1RA},225_{2RA},** second **225_{1RB},225_{2RB}** and third **225_{1RC},225_{2RC}** coupling resistors). In any case, the first **225_{1RA},225_{2RA},** second **225_{1RB},225_{2RB}** and third **225_{1RC},225_{2RC}** coupling resistors may be replaced, at least in part, by other suitable coupling elements *(e.g.,* capacitive and/or inductive coupling elements).

The first coupling resistor **225_{1RA},225_{2RA}** has a first terminal electrically coupled *(e.g.,* directly coupled) to the collector terminal of the shared transistor **220_{T}** and a second terminal electrically coupled to the command pin of the control unit **215** providing the command signal *S_{COMM1}*,*S_{COMM2}*. The second coupling resistor **225_{1RB},225_{2RB}** has a first terminal electrically coupled *(e.g.,* directly coupled) to the second terminal of the first coupling resistor **225_{1RA},225_{2RA}** (and, hence, electrically coupled to the command pin for receiving the command signal *S_{COMM1}*,*S_{COMM2}*) and a second terminal electrically coupled *(e.g.,* directly coupled) to the base terminal of the dedicated transistor **225_{1T},225_{2T}.** The third coupling resistor **225_{1RC},225_{2RC}** has a first terminal electrically coupled *(e.g.,* directly coupled) to the second terminal of the second coupling resistor **225_{1RB},225_{2RB}** (and, hence, electrically coupled to the base terminal of the dedicated transistor **225_{1T},225_{2T}**) and a second terminal electrically coupled to the ground terminal.

As better understood while progressively discussing the operation of the circuit system **200,** provision of the first **225_{1RA},225_{2RA},** second **225_{1RB},225_{2RB}** and third **225_{1RC},225_{2RC}** coupling resistors allows correct combination *(i.e.,* superimposition) of the PWM voltage with the command signal *S_{COMM1}*,*S_{COMM2}*.

During operation, when the relay **210₁,210₂** has to be switched from the deactivated state to the activated state (as the treatment program requires the energization of the associated electric load **205₁,205₂),** the control unit **215** sets the command signal *S_{COMM1}*,*S_{COMM2}* at the high logic level and the PWM voltage *V_{PWM}* at the hold duty cycle (first driving embodiment), or it sets the command signal *S_{COMM1}*,*S_{COMM2}* at the tristate level and the PWM voltage *V_{PWM}* at the activation duty cycle (second driving embodiment). The superimposition of the PWM voltage *(i.e.,* of a derivative thereof resulting from low-pass filtering and shared transistor **220_{T}** processing) with the high logic level *(i.e.,* with a derivative thereof resulting from its partition over the second **225_{1RB},225_{2RB}** and third **225_{1RC},225_{2RC}** coupling resistors), or with the tristate level, generates across the relay coil an activation driving voltage sufficient to ensure correct switching of the relay **210₁,210₂** into the activated state *(i.e.,* central contact **C_{1B},C_{2B}** of the relay **210₁,210₂** moving into contact with the respective side contact **C_{1C},C_{2C}**).

According to an embodiment, the activation duty cycle is 100%. However, an activation duty cycle lower than 100% may be set in this depending on design options of the circuit system **200.** Design options may comprise at least one among: values of the PWM voltage *V_{PWM}* and of the command signal *S_{COMM1}*,*S_{COMM2},* sizing of the shared **220_{T}** and dedicated **225_{T1},225_{T1}** transistors, sizing of the first **225_{1RA},225_{2RA},** second **225_{1RB},225_{2RB}** and third **225_{1RC},225_{2RC}** coupling resistors, and electromechanical properties of the relay coil (such as voltage responsivity change affecting it due to wearing and/or malfunctioning).

According to an embodiment, the hold duty cycle is lower than 100% - and, anyway, it is lower than the activation duty cycle. In general, the value of the hold duty cycle may be set depending on design options of the circuit system **200.** Design options may comprise at least one among: values of the PWM voltage *V_{PWM}* and of the command signal *S_{COMM1}*,*S_{COMM2},* sizing of the shared **220_{T}** and dedicated **225_{T1},225_{T1}** transistors, sizing of the first **225_{1RA},225_{2RA},** second **225_{1RB},225_{2RB}** and third **225_{1RC},225_{2RC}** coupling resistors, and electromechanical properties of the relay coil (such as voltage responsivity change affecting it due to wearing and/or malfunctioning).

After the relay **210₁,210₂** has switched from the deactivated state to the activated state (as sensed by a sensing arrangement, discussed below), the control unit **215** sets the corresponding command signal *S_{COMM1}*,*S_{COMM2}* at the tristate level and the PWM voltage *V_{PWM}* at the hold duty cycle (first and second driving embodiments). The PWM voltage *V_{PWM} (i.e.,* the derivative thereof resulting from low-pass filtering and shared transistor **220_{T}** processing) generates across the relay coil a hold driving voltage sufficient to ensure correct holding of the relay **210₁,210₂** in the activated state (*i.e*., central contact **C_{1B},C_{2B}** of the relay **210₁,210₂** held in contact with the respective side contact **C_{1C},C_{2C}**).

When instead the relay **210₁,210₂** has to be switched from the activated state to the deactivated state, the control unit **215** sets the corresponding command signal *S_{COMM1}*,*S_{COMM2}* at the low logic level. The low logic level generates a low-impedance path that strongly reduces the passage of the PWM voltage *V_{PWM} (i.e.,* of the derivative thereof resulting from low-pass filtering and shared transistor **220_{T}** processing) across the dedicated transistor **225_{1T},225_{2T},** and hence across the relay coil. This induces the relay coil deactivation, which causes the central contact **C_{1B},C_{2B}** of the relay **210₁,210₂** to get back to its rest (de-actuated) position *(i.e.,* in contact with the respective side contact **C_{1A},C_{2A}**).

As mentioned above, the circuit system **200** also comprises a sensing arrangement electrically coupled to the side contact **C_{1C},C_{2C}** of the relay **210₁,210₂.** Broadly speaking, the sensing arrangement is configured for sensing the activated or deactivated states of the relay **210₁,210₂** and for providing a corresponding signal (hereinafter, state signal) *S_{STATE1}*,*S_{STATE2}* to a corresponding pin (hereinafter, sensing pin) of the control unit **215** - in response to that, the control unit **215** commands the activation or the activation holding by means of the command signals *S_{COMM1}*,*S_{COMM2},* as mentioned above.

Preferably, as illustrated, the sensing arrangement comprises a resistive sensing network between the side contact **C_{1C},C_{2C}** of the relay **210₁,210₂** and the sensing pin of the control unit **215.**

Even more preferably, the sensing arrangement comprises a first sensing resistor **230_{1A},230_{2A}** having a first terminal electrically coupled to the side contact **C_{1C},C_{2C}** of the relay **210₁,210₂** and a second terminal coupled to the respective sensing pin of the control unit **215,** and a second sensing resistor **230_{1B},230_{2B}** having a first terminal electrically coupled to the second terminal of the first sensing resistor **230_{1A},230_{2A}** (and, hence, to the respective sensing pin of the control unit **215**) and a second terminal electrically coupled to the ground terminal.

In this configuration, which is not limiting for the present invention, each state signal *S_{STATE1}*,*S_{STATE2}* can take two different levels according to the relay states, namely a low level S_{STATE,L} equal to the ground voltage *GND* when the relay **210₁,210₂** is deactivated (indeed, in such a condition, the side contact **C_{1C},C_{2C}** of the relay **210₁,210₂** is floating, and any voltage on it is forced down to the ground voltage *GND* by pull-down effect of the first **230_{1A},230_{2A}** and second **230_{1B},230_{2B}** sensing resistors), and a high level S_{STATE,H} higher than the low level **S**_{STATE,L} (indeed, in such a condition, the side contact **C_{1C},C_{2C}** of the relay **210₁,210₂** is electrically coupled to the neutral terminal **N,** and a partition of the voltage at the neutral terminal **N** on the first **230_{1A},230_{2A}** and second **230_{1B},230_{2B}** sensing resistors takes place).

According to an embodiment of the present invention, in response to the state signal *S_{STATE1}*,*S_{STATE2}* the control unit **215** is configured to change at least one between the activation and the hold duty cycles of the PWM voltage *V_{PWM}* (and, hence, the activation and hold driving voltages applied to the relay **210₁,210₂**).

For example, the control unit **215** is configured to increase the activation duty cycle of the PWM voltage *V_{PWM}* if, during sensing, the PWM voltage *V_{PWM}* has the activation duty cycle and the relay **210₁** and/or **210₂** is in the deactivated state (*S_{STATE1}*=S_{STATE,L} and/or *S_{STATE2}*=S_{STATE,L}, respectively). In other words, the control unit **215** is configured to increase the activation duty cycle of the PWM voltage *V_{PWM}* if the current activation duty cycle is insufficient to activate the relay **210₁,210₂** *(e.g.,* because of an altered voltage responsivity of relay **210₁,210₂** due, for example, to relay **210₁,210₂** malfunctioning and/or wearing).

Additionally or alternatively, the control unit **215** is configured to increase the hold duty cycle of the PWM voltage *V_{PWM}* if, during sensing, the PWM voltage *V_{PWM}* has the hold duty cycle and the relay **210₁,210₂** is in the deactivated state (*S_{STATE1}*=S_{STATE,H} and/or *S_{STATE2}*=S_{STATE,H}, respectively). In other words, the control unit **215** is configured to increase the hold duty cycle of the PWM voltage *V_{PWM}* if, after relay **210₁,210₂** activation, the current hold duty cycle is insufficient to keep the relay **210₁,210₂** activated (*e.g.*, because of an altered voltage responsivity of relay **210₁,210₂** due, for example, to relay **210₁,210₂** malfunctioning and/or wearing).

When, as in the considered embodiment, a plurality of (two or more) relays are provided in the circuit system **200** (such as the relays **210₁,210₂**), it might happen that each relay **210₁,210₂** is, or becomes over time, responsive to respective minimum activation and/or hold driving voltages (and, hence, to respective minimum activation and/or hold duty cycles of the PWM voltage *V_{PWM}*)*.* This could make the driving with differentiated (activation and holding) duty cycles difficult, especially when, as herein exemplary assumed, the driving arrangement is configured to drive the relays **210₁,210₂** by means of a single PWM voltage *V_{PWM} (i.e.,* with a PWM voltage *V_{PWM}* having same activation and hold duty cycles for all the relays **210₁,210₂**). In order to avoid driving errors, the control unit **215** is preferably configured to test the operation of the relays **210₁,210₂** (operation test), in order to determine the actual minimum activation and hold driving voltages of each one of them *(i.e.* the current minimum driving voltages able to activate and hold each relay **210₁,210₂** in the activated state), and to adjust
- the activation duty cycle of the PWM voltage *V_{PWM}* at the highest activation duty cycle among said minimum activation duty cycles of the relays **210₁,210₂;** and/or
- the hold duty cycle of the PWM voltage *V_{PWM}* at the highest hold duty cycle among said minimum hold duty cycles of the relays **210₁,210₂.**

The "and/or" means that embodiments may be provided wherein only the activation duty cycle or only the hold duty cycle is dynamically adjusted according to specific design option of the circuit system **200** (in which cases, the other duty cycle - *i.e.*, the hold duty cycle and the activation duty cycle, respectively - is fixedly set).

Preferably, the operation test is carried out periodically on a set of (one or more) relays. More preferably, the operation test is carried out before the start of a treatment program (for example, before the start of each treatment program). Even more preferably, the operation test is carried out only on the relays involved in the treatment program that is about to start.

According to an embodiment of the present invention, the operation test comprises:
a) selecting, by means of the command signals *S_{COMM1}*,*S_{COMM2}*, a relay to be tested among the set of relays to be tested. The selection of a relay (for example, the relay **210₁** or the relay **210₂** in the example at issue), is achieved by setting the respective command signal (respectively, the command signal *S_{COMM1}* or the command signal *S_{COMM2}* in the example at issue) at the high and tristate levels (as discussed in the following b) and c) steps) while setting the command signal of the other relays (respectively, the command signal *S_{COMM2}* or the command signal *S_{COMM1}* in the example at issue) at the low logic level;
b) setting the command signal of the selected relay at the high logic level (first driving embodiment) or at the tristate level (second driving embodiment) and applying a PWM voltage *V_{PWM}* with progressively increasing duty cycle. The minimum activation duty cycle for the selected relay is identified as the duty cycle that determines the activation of the relay - which is sensed, as discussed above, by cooperation of the associated sensing arrangement (for example, the first **230_{1A},230_{2A}** and second **230_{1B},230_{2B}** sensing resistors associated with the relays **210₁,210₂,** respectively) and of the control unit **215.** The identified minimum activation duty cycle is preferably stored in a memory location of the control unit **215;**
c) setting the command signal of the selected (and activated) relay at the tristate level (first and second driving embodiments) and applying a PWM voltage *V_{PWM}* with progressively decreasing duty cycle *(e.g.,* from the minimum activation duty cycle just identified for that relay). The minimum hold duty cycle for the selected relay is identified as the duty cycle that determines the deactivation of the relay - which is sensed, as discussed above, by cooperation of the associated sensing arrangement (for example, the first **230_{1A},230_{2A}** and second **230_{1B},230_{2B}** sensing resistors associated with the relays **210₁,210₂,** respectively) and of the control unit **215.** The identified minimum hold duty cycle is preferably stored in a memory location of the control unit **215;**
d) repeating the steps a), b) and c) for each one of the set of relays to be tested.

After the operation test has been completed for all the set of relays, the driving of the relays takes place according to the identified minimum activation and hold duty cycles. In the example herein considered wherein same activation and hold driving voltages are applied to all the selected relays, a common activation duty cycle and a common hold duty cycles are used. According to an embodiment of the present invention, the common activation duty cycle is determined as the highest duty cycle among the minimum activation duty cycles (so as to ensure that even the relay requiring the highest activation driving voltage is correctly activated) and the common hold duty cycle is determined as the lowest duty cycle among the minimum hold duty cycles (so as to ensure that even the relay requiring the lowest hold driving voltage is correctly held in the activated state).

The present invention provides correct and efficient control of relay activation and deactivation. Indeed, thanks to the use of two driving voltages, *i.e.* the activation and hold driving voltages, improved relays performance and reliability are achieved. Indeed, thanks to the proposed sensing arrangement that avoids any uncertainty about the actual driving voltages to which each relay is responsive and to the proposed switching arrangement, each relay can substantially be driven by those (activation or holding) driving voltages actually necessary for switching it into the activation or holding states, respectively. Therefore, none of the relays is exposed to the risk that, when driven to be switched into the holding state, the current through the respective relay coil is too small to close the relay contacts, or to cause the relay contacts to close intermittently and "chatter", or to the risk that, when driven to be switched into the activation state, an increased current through the relay coil causes overheating or relay coil burn-out.

Moreover, as the activation and hold driving voltages are applied by means of a PWM signal, a lower average power is required to drive the relays, which also translates into the possibility of implementing the circuit system on a board *(e.g.,* a "*Printed Circuit Board*") demanding lower power supply, lower size, lower costs, and lower heat and power dissipations.

In addition, thanks to the sensing arrangement and to the processing on the state signals provided by it, it is also possible to derive the different actual driving voltages to which all relays are responsive (or to which they become responsive over time, *e.g.* due to wearing and/or malfunctioning affecting the electromechanical properties of the relays), and to drive concurrently all the selected relays by means of same (common) driving voltages. This allows achieving a circuit system that is easy to implement, and that makes relay activation and deactivation highly reliable.

## Claims

1. Electric appliance (**100**) comprising:
at least one electromechanical device (**210₁,210₂**) switchable between activated and deactivated states thereby allowing energization and de-energization, respectively, of at least one electric load (**205₁,205₂**) of the electric appliance (**100**), the electromechanical device (**210₁,210₂**) being responsive to a first driving voltage above which it is switched into an activated state, and to a second driving voltage, lower than the first driving voltage, above which the electromechanical device (**210₁,210₂**) is held in the activated state,
a switching arrangement (**215,220,225₁,225₂**) for switching the electromechanical device (**210₁,210₂**) according to a combination between a command signal (*S_{COMM1}*,*S_{COMM2}*) and a PWM signal, the duty cycle of the PWM signal being such that:
- in order to switch the electromechanical device in the activated state, the PWM signal combined with the command signal (*S_{COMM1}*,*S_{COMM2}*) results in a driving voltage at the electromechanical device (**210₁,210₂**) at least equal to said first driving voltage, and
- in order to hold the electromechanical device in the activated state, the PWM signal combined with the command signal (*S_{COMM1}*,*S_{COMM2}*) results in a driving voltage at the electromechanical device (**210₁,210₂**) between said first and second driving voltages,
**characterized in that**
the duty cycle comprises a first duty cycle, whereby the PWM signal results in the first driving voltage at the electromechanical device (**210₁,210₂**), and a second duty cycle, lower than the first duty cycle, whereby the PWM signal results in the second driving voltage at the electromechanical device (**210₁,210₂**), and **in that**
- in order to switch the electromechanical device in the activated state,
- the duty cycle of the PWM signal is the second duty cycle and the command signal (*S_{COMM1}*,*S_{COMM2}*) is at a high logic level, or
- the duty cycle of the PWM signal is the first duty cycle and the command signal is at a tristate level, the tristate level corresponding to a high impedance of a command pin of the switching arrangement (**215,220,225₁,225₂**) that provides said command signal (*S_{COMM1}*,*S_{COMM2}*),
whereby the combination of the command signal with the PWM signal results in said first driving voltage, and
- in order to hold the electromechanical device in the activated state, the duty cycle of the PWM signal is the second duty cycle and the command signal is at the tristate level, whereby the combination of the command signal with the PWM signal results in said second driving voltage.

2. Electric appliance (**100**) according to claim 1, wherein at a low logic level of the command signal the switching arrangement (**215,220,225₁,225₂**) is configured for preventing the PWM signal from being fed to the electromechanical device (**210₁,210₂**), whereby the electromechanical device (**210₁,210₂**) is switched into the deactivated state.

3. Electric appliance (**100**) according to any of the preceding claims, wherein the switching arrangement (**215,220,225₁,225₂**) comprises:
a first coupling element (**225_{1RA},225_{2RA}**) having a first terminal for receiving the PWM signal,
a second coupling element (**225_{1RB},225_{2RB}**) having a first terminal electrically coupled to a second terminal of the first coupling element (**225_{1RA},225_{2RA}**), and
a third coupling element (**225_{1RC},225_{2RC}**) having a first terminal electrically coupled to a second terminal of the second coupling element (**225_{1RB},225_{2RB}**) and to a base terminal of a transistor **225_{1T},225_{2T}** that is coupled to the electromechanical device (**210₁,210₂**), and a second terminal receiving a reference voltage,
the command signal being fed to the second terminal of the first coupling element (**225_{1RA},225_{2RA}**).

4. Electric appliance (**100**) according to claims 2 and 3, wherein said low logic level of the command signal (*S_{COMM1}*,*S_{COMM2}*) is a voltage equal to the reference voltage.

5. Electric appliance (**100**) according to any of the preceding Claims, wherein said at least one electromechanical device (**210₁,210₂**) comprises at least one relay (**210₁,210₂**).

6. Electric appliance (**100**) according to any of the preceding Claims, wherein the electric appliance (**100**) is a laundry washing appliance, a laundry drying appliance, or a laundry washing/drying appliance.

7. Electric appliance (100) according to any of the preceding Claims, wherein the electric load (**205₁,205₂**) comprises at least one among electric heaters, drain or recirculation pumps, light sources, electric motors, and fans.

8. Method for switching an electromechanical device (**210₁,210₂**) between activated and deactivated states thereby allowing energization and de-energization, respectively, of an electric load (**205₁,205₂**)**,** wherein the electromechanical device (**210₁,210₂**) is responsive to a first driving voltage above which it is switched into an activated state, and to a second driving voltage, lower than the first driving voltage, above which the electromechanical device (**210₁,210₂**) is held in the activated state,
the method comprising switching the electromechanical device (**210₁,210₂**) according to a combination between a command signal (*S_{COMM1}*,*S_{COMM2}*) and a PWM signal, the duty cycle of the PWM signal being such that:
- in order to switch the electromechanical device in the activated state the PWM signal combined with the command signal (*S_{COMM1}*,*S_{COMM2}*) results in a driving voltage at the electromechanical device (**210₁,210₂**) at least equal to said first driving voltage, and
- in order to hold the electromechanical device in the activated state, the PWM signal combined with the command signal results in a driving voltage at the electromechanical device (**210₁,210₂**) between said first and second driving voltages,
**characterized in that**
the duty cycle comprises a first duty cycle, whereby the PWM signal results in the first driving voltage at the electromechanical device (**210₁,210₂**), and a second duty cycle, lower than the first duty cycle, whereby the PWM signal results in the second driving voltage at the electromechanical device (**210₁,210₂**), and **in that**
- in order to switch the electromechanical device in the activated state,
- the duty cycle of the PWM signal is the second duty cycle and the command signal (*S_{COMM1}*,*S_{COMM2}*) is at a high logic level, or
- the duty cycle of the PWM signal is the first duty cycle and the command signal (*S_{COMM1}*,*S_{COMM2}*) is at a tristate level, the tristate level corresponding to a high impedance of a command pin of the switching arrangement (**215,220,225₁,225₂**) that provides said command signal (*S_{COMM1}*,*S_{COMM2}*),
whereby the combination of the command signal with the PWM signal results in said first driving voltage, and
- in order to hold the electromechanical device in the activated state, the duty cycle of the PWM signal is the second duty cycle and the command signal (*S_{COMM1}*,*S_{COMM2}*) is at the tristate level, whereby the combination of the command signal (*S_{COMM1}*,*S_{COMM2}*) with the PWM signal results in said second driving voltage.

9. Method according to claim 8, further comprising setting the command signal (*S_{COMM1}*,*S_{COMM2}*) at a low logic level such as to prevent the PWM signal from being fed to the electromechanical device (**210₁,210₂**), at the low logic level of the command signal (*S_{COMM1}*,*S_{COMM2}*) the electromechanical device (**210₁,210₂**) being switched into the deactivated state.

## Patentansprüche

1. Elektrisches Gerät (100), das Folgendes umfasst:
mindestens eine elektromechanische Vorrichtung (210₁, 210₂), die zwischen einem aktivierten und einem deaktivierten Zustand umschaltbar ist und dadurch die Aktivierung bzw. Deaktivierung mindestens einer elektrischen Last (205₁, 205₂) des elektrischen Gerätes (100) ermöglicht, wobei die elektromechanische Vorrichtung (210₁, 210₂) auf eine erste Treiberspannung, oberhalb derer sie in einen aktivierten Zustand geschaltet wird, und auf eine zweite Treiberspannung, die niedriger als die erste Treiberspannung ist und oberhalb derer die elektromechanische Vorrichtung (210₁, 210₂) in dem aktivierten Zustand gehalten wird, anspricht,
eine Schaltanordnung (215, 220, 225₁, 225₂) zum Schalten der elektromechanischen Vorrichtung (210₁, 210₂) in Abhängigkeit von einer Kombination zwischen einem Befehlssignal (*S_{COMM1}*, *S_{COMM2}*) und einem PWM-Signal, wobei das Tastverhältnis des PWM-Signals derart ist, dass:
- um die elektromechanische Vorrichtung in den aktivierten Zustand zu schalten, das PWM-Signal in Kombination mit dem Befehlssignal (*S_{COMM1}*, *S_{COMM2}*) zu einer Treiberspannung an der elektromechanischen Vorrichtung (210₁, 210₂) führt, die mindestens gleich der ersten Treiberspannung ist, und
- um die elektromechanische Vorrichtung im aktivierten Zustand zu halten, ergibt das PWM-Signal in Kombination mit dem Befehlssignal (*S_{COMM1}, S_{COMM2}*) eine Treiberspannung an der elektromechanischen Vorrichtung (210₁, 210₂) zwischen der ersten und der zweiten Treiberspannung,
**dadurch gekennzeichnet, dass**
das Tastverhältnis ein erstes Tastverhältnis umfasst, wodurch das PWM-Signal zu der ersten Treiberspannung an der elektromechanischen Vorrichtung (210₁, 210₂) führt, und ein zweites Tastverhältnis umfasst, das niedriger als das erste Tastverhältnis ist, wodurch das PWM-Signal zu der zweiten Treiberspannung an der elektromechanischen Vorrichtung (210₁, 210₂) führt, und dadurch, dass
- um die elektromechanische Vorrichtung in den aktivierten Zustand zu schalten,
- das Tastverhältnis des PWM-Signals das zweite Tastverhältnis ist und das Befehlssignal (*S_{COMM1}, S_{COMM2}*) einen hohen logischen Pegel hat, oder
- das Tastverhältnis des PWM-Signals das erste Tastverhältnis ist und das Befehlssignal (*S_{COMM1}*, *S_{COMM2}*) auf einem Tristate-Pegel ist, wobei der Tristate-Pegel einer hohen Impedanz eines Steuerpins der Schaltanordnung (215, 220, 225₁, 225₂) entspricht, die das Steuersignal (*S_{COMM1}*, *S_{COMM2}*) liefert,
wobei die Kombination des Befehlssignals (*S_{COMM1}, S_{COMM2}*) mit dem PWM-Signal zu der ersten Treiberspannung führt, und
- um die elektromechanische Vorrichtung im aktivierten Zustand zu halten, das Tastverhältnis des PWM-Signals das zweite Tastverhältnis ist und das Befehlssignal (*S_{COMM1}*, *S_{COMM2}*) auf dem Tristate-Pegel ist, wodurch die Kombination des Befehlssignals (*S_{COMM1}*, *S_{COMM2}*) mit dem PWM-Signal zu der zweiten Treiberspannung führt.

2. Elektrisches Gerät (100) nach Anspruch 1, wobei bei einem niedrigen logischen Pegel des Befehlssignals (*S_{COMM1}*, *S_{COMM2}*) die Schaltanordnung (215, 220, 225₁, 225₂) so konfiguriert ist, dass sie verhindert, dass das PWM-Signal der elektromechanischen Vorrichtung (210₁, 210₂) zugeführt wird, wodurch die elektromechanische Vorrichtung (210₁, 210₂) in den deaktivierten Zustand geschaltet wird.

3. Elektrisches Gerät (100) nach einem der vorhergehenden Ansprüche, wobei die Schaltanordnung (215, 220, 225₁, 225₂) Folgendes umfasst:
ein erstes Kopplungselement (225_{1RA}, 225_{2RA}) mit einem ersten Anschluss zum Empfang des PWM-Signals,
ein zweites Kopplungselement (225_{1RB}, 225_{2RB}) mit einem ersten Anschluss, der elektrisch mit einem zweiten Anschluss des ersten Kopplungselements (225_{1RA}, 225_{2RA}) gekoppelt ist, und
ein drittes Kopplungselement (225_{1RC}, 225_{2RC}) mit einem ersten Anschluss, der elektrisch mit einem zweiten Anschluss des zweiten Kopplungselements (225_{1RB}, 225_{2RB}) und mit einem Basisanschluss eines Transistors 225_{1T}, 225_{2T} gekoppelt ist, der mit der elektromechanischen Vorrichtung (210₁, 210₂) gekoppelt ist, und einem zweiten Anschluss, der eine Referenzspannung empfängt,
wobei das Befehlssignal (*S_{COMM1}*, *S_{COMM2}*) dem zweiten Anschluss des ersten Kopplungselements (225_{1RA}, 225_{2RA}) zugeführt wird.

4. Elektrisches Gerät (100) nach Anspruch 2 und 3, wobei der niedrige logische Pegel des Befehlssignals (*S_{COMM1}, S_{COMM2}*) eine Spannung ist, die der Referenzspannung entspricht.

5. Elektrisches Gerät (100) nach einem der vorhergehenden Ansprüche, wobei die mindestens eine elektromechanische Vorrichtung (210₁, 210₂) mindestens ein Relais (210₁, 210₂) umfasst.

6. Elektrisches Gerät (100) nach einem der vorhergehenden Ansprüche, wobei das elektrische Gerät (100) ein Wäschewaschgerät, ein Wäschetrockengerät oder ein Wäschewasch-/Trockengerät ist.

7. Elektrisches Gerät (100) nach einem der vorhergehenden Ansprüche, wobei die elektrische Last (205₁, 205₂) mindestens eines der folgenden Elemente umfasst: elektrische Heizungen, Abfluss- oder Umwälzpumpen, Lichtquellen, Elektromotoren und Ventilatoren.

8. Verfahren zum Schalten einer elektromechanischen Vorrichtung (210₁, 210₂) zwischen einem aktivierten und einem deaktivierten Zustand, wodurch die Erregung bzw. Entregung einer elektrischen Last (205₁, 205₂) ermöglicht wird, wobei die elektromechanische Vorrichtung (210₁, 210₂) auf eine erste Treiberspannung, oberhalb derer sie in einen aktivierten Zustand geschaltet wird, und auf eine zweite Treiberspannung, die niedriger als die erste Treiberspannung ist und oberhalb derer die elektromechanische Vorrichtung (210₁, 210₂) in dem aktivierten Zustand gehalten wird, anspricht,
wobei das Verfahren das Schalten der elektromechanischen Vorrichtung (210₁, 210₂) gemäß einer Kombination zwischen einem Befehlssignal (*S_{COMM1}, S_{COMM2}*) und einem PWM-Signal umfasst, wobei das Tastverhältnis des PWM-Signals derart ist, dass:
- um die elektromechanische Vorrichtung in den aktivierten Zustand zu schalten, das PWM-Signal in Kombination mit dem Befehlssignal (*S_{COMM1}*, *S_{COMM2}*) zu einer Treiberspannung an der elektromechanischen Vorrichtung (210₁, 210₂) führt, die mindestens gleich der ersten Treiberspannung ist, und
- um die elektromechanische Vorrichtung im aktivierten Zustand zu halten, ergibt das PWM-Signal in Kombination mit dem Befehlssignal (*S_{COMM1}*, *S_{COMM2}*) eine Treiberspannung an der elektromechanischen Vorrichtung (210₁, 210₂) zwischen der ersten und der zweiten Treiberspannung,
**dadurch gekennzeichnet, dass**
das Tastverhältnis ein erstes Tastverhältnis umfasst, wodurch das PWM-Signal zu der ersten Treiberspannung an der elektromechanischen Vorrichtung (210₁, 210₂) führt, und ein zweites Tastverhältnis umfasst, das niedriger als das erste Tastverhältnis ist, wodurch das PWM-Signal zu der zweiten Treiberspannung an der elektromechanischen Vorrichtung (210₁, 210₂) führt, und dadurch, dass
- um die elektromechanische Vorrichtung in den aktivierten Zustand zu schalten,
- das Tastverhältnis des PWM-Signals das zweite Tastverhältnis ist und das Befehlssignal (*S_{COMM1}, S_{COMM2}*) einen hohen logischen Pegel hat, oder
- das Tastverhältnis des PWM-Signals das erste Tastverhältnis ist und das Befehlssignal (*S_{COMM1}*, *S_{COMM2}*) auf einem Tristate-Pegel ist, wobei der Tristate-Pegel einer hohen Impedanz eines Steuerpins der Schaltanordnung (215, 220, 225₁, 225₂) entspricht, die das Steuersignal (*S_{COMM1}*, *S_{COMM2}*) liefert,
wobei die Kombination des Befehlssignals (*S_{COMM1}, S_{COMM2}*) mit dem PWM-Signal zu der ersten Treiberspannung führt, und
- um die elektromechanische Vorrichtung im aktivierten Zustand zu halten, das Tastverhältnis des PWM-Signals das zweite Tastverhältnis ist und das Befehlssignal (*S_{COMM1}, S_{COMM2}*) auf dem Tristate-Pegel ist, wodurch die Kombination des Befehlssignals (*S_{COMM1}, S_{COMM2}*) mit dem PWM-Signal zu der zweiten Treiberspannung führt.

9. Verfahren nach Anspruch 8, ferner umfassend das Setzen des Befehlssignals (*S_{COMM1}*, *S_{COMM2}*) auf einen niedrigen logischen Pegel, um zu verhindern, dass das PWM-Signal der elektromechanischen Vorrichtung (210₁, 210₂) zugeführt wird, wobei bei dem niedrigen logischen Pegel des Befehlssignals (*S_{COMM1}*, *S_{COMM2}*) die elektromechanische Vorrichtung (210₁, 210₂) in den deaktivierten Zustand geschaltet wird.

## Revendications

1. Appareil électrique (100) comprenant :
au moins un dispositif électromécanique (210₁, 210₂) pouvant être commuté entre des états activé et désactivé pour ainsi respectivement permettre la mise sous tension et la mise hors tension d'au moins une charge électrique (205₁, 205₂) de l'appareil électrique (100), le dispositif électromécanique (210₁, 210₂) étant sensible à une première tension de pilotage au-delà de laquelle il est commuté dans un état activé et à une seconde tension de pilotage, inférieure à la première tension de pilotage, au-delà de laquelle le dispositif électromécanique(210₁, 210₂) est maintenu dans l'état activé,
un agencement de commutation (215, 220, 225₁, 225₂) pour commuter le dispositif électromécanique (210₁, 210₂) conformément à une combinaison entre un signal de commande (*S_{COMM1}*, *S_{COMM2}*) et un signal PWM, le rapport cyclique du signal PWM étant tel que :
- afin de commuter le dispositif électromécanique dans l'état activé, le signal PWM combiné avec le signal de commande (*S_{COMM1}*, *S_{COMM2}*) aboutit à une tension de pilotage au niveau du dispositif électromécanique (210₁, 210₂) au moins égale à ladite première tension de pilotage, et
- afin de maintenir le dispositif électromécanique dans l'état activé, le signal PWM combiné avec le signal de commande (*S_{COMM1}, S_{COMM2}*) aboutit à une tension de pilotage au niveau du dispositif électromécanique (210₁, 210₂) entre lesdites première et seconde tensions de pilotage,
**caractérisé en ce que**
le rapport cyclique comprend un premier rapport cyclique, d'où il résulte que le signal PWM aboutit à la première tension de pilotage au niveau du dispositif électromécanique (210₁, 210₂), et un second rapport cyclique, inférieur au premier rapport cyclique, d'où il résulte que le signal PWM aboutit à la seconde tension de pilotage au niveau du dispositif électromécanique (210₁, 210₂), et **en ce que**
- afin de commuter le dispositif électromécanique dans l'état activé,
- le rapport cyclique du signal PWM est le second rapport cyclique et le signal de commande (*S_{COMM1}*, *S_{COMM2}*) est à un niveau logique haut, ou
- le rapport cyclique du signal PWM est le premier rapport cyclique et le signal de commande (*S_{COMM1}, S_{COMM2}*) est à un niveau à trois états, le niveau à trois états correspondant à une impédance élevée d'une broche de commande de l'agencement de commutation (215, 220, 225₁, 225₂) qui fournit ledit signal de commande (*S_{COMM1}*, *S_{COMM2}*),
d'où il résulte que la combinaison du signal de commande (*S_{COMM1}, S_{COMM2}*) avec le signal PWM aboutit à ladite première tension de pilotage, et
- afin de maintenir le dispositif électromécanique dans l'état activé, le rapport cyclique du signal PWM est le second rapport cyclique et le signal de commande (*S_{COMM1}, S_{COMM2}*) est au niveau à trois états, d'où il résulte que la combinaison du signal de commande (*S_{COMM1}*, *S_{COMM2}*) avec le signal PWM aboutit à ladite seconde tension de pilotage.

2. Appareil électrique (100) selon la revendication 1, dans lequel, à un niveau logique bas du signal de commande (*S_{COMM1}*, *S_{COMM2}*), l'agencement de commutation (215, 220, 225₁, 225₂) est configuré pour empêcher l'alimentation du signal PWM sur le dispositif électromécanique (210₁, 210₂), d'où il résulte que le dispositif électromécanique (210₁, 210₂) est commuté dans l'état désactivé.

3. Appareil électrique (100) selon l'une quelconque des revendications précédentes, dans lequel l'agencement de commutation (215, 220, 225₁, 225₂) comprend :
un premier élément de couplage (225_{1RA}, 225_{2RA}) qui comporte une première borne pour recevoir le signal PWM,
un deuxième élément de couplage (225_{1RB}, 225_{2RB}) qui comporte une première borne couplée électriquement à une seconde borne du premier élément de couplage (225_{1RA}, 225_{2RA}), et
un troisième élément de couplage (225_{1RC}, 225_{2RC}) qui comporte une première borne couplée électriquement à une seconde borne du deuxième élément de couplage (225_{1RB}, 225_{2RB}) et à une borne de base d'un transistor (225_{1T}, 225_{2T}) qui est couplé au dispositif électromécanique (210₁, 210₂), et une seconde borne qui reçoit une tension de référence,
le signal de commande (*S_{COMM1}*, *S_{COMM2}*) étant alimenté sur la seconde borne du premier élément de couplage (225_{1RA}, 225_{2RA}) .

4. Appareil électrique (100) selon les revendications 2 et 3, dans lequel ledit niveau logique bas du signal de commande (*S_{COMM1}*, *S_{COMM2}*) est une tension égale à la tension de référence.

5. Appareil électrique (100) selon l'une quelconque des revendications précédentes, dans lequel ledit au moins un dispositif électromécanique (210₁, 210₂) comprend au moins un relais (210₁, 210₂).

6. Appareil électrique (100) selon l'une quelconque des revendications précédentes, dans lequel l'appareil électrique (100) est un appareil de lave-linge, un appareil de sèche-linge ou un appareil de lave-linge/sèche-linge.

7. Appareil électrique (100) selon l'une quelconque des revendications précédentes, dans lequel la charge électrique (205₁, 205₂) comprend au moins une charge parmi des moyens de chauffage électrique, des pompes de drainage ou de recirculation, des sources de lumière, des moteurs électriques et des ventilateurs.

8. Procédé pour commuter un dispositif électromécanique (210₁, 210₂) entre des états activé et désactivé pour ainsi respectivement permettre la mise sous tension et la mise hors tension d'une charge électrique (205₁, 205₂), dans lequel le dispositif électromécanique (210₁, 210₂) est sensible à une première tension de pilotage au-delà de laquelle il est commuté dans un état activé et à une seconde tension de pilotage, inférieure à la première tension de pilotage, au-delà de laquelle le dispositif électromécanique (210₁, 210₂) est maintenu dans l'état activé,
le procédé comprenant la commutation du dispositif électromécanique (210₁, 210₂) conformément à une combinaison entre un signal de commande (*S_{COMM1}, S_{COMM2}*) et un signal PWM, le rapport cyclique du signal PWM étant tel que :
- afin de commuter le dispositif électromécanique dans l'état activé, le signal PWM combiné avec le signal de commande (*S_{COMM1}, S_{COMM2}*) aboutit à une tension de pilotage au niveau du dispositif électromécanique (210₁, 210₂) au moins égale à ladite première tension de pilotage, et
- afin de maintenir le dispositif électromécanique dans l'état activé, le signal PWM combiné avec le signal de commande (*S_{COMM1}, S_{COMM2}*) aboutit à une tension de pilotage au niveau du dispositif électromécanique (210₁, 210₂) entre lesdites première et seconde tensions de pilotage,
**caractérisé en ce que**
le rapport cyclique comprend un premier rapport cyclique, d'où il résulte que le signal PWM aboutit à la première tension de pilotage au niveau du dispositif électromécanique (210₁, 210₂), et un second rapport cyclique, inférieur au premier rapport cyclique, d'où il résulte que le signal PWM aboutit à la seconde tension de pilotage au niveau du dispositif électromécanique (210₁, 210₂), et **en ce que**
- afin de commuter le dispositif électromécanique dans l'état activé,
- le rapport cyclique du signal PWM est le second rapport cyclique et le signal de commande (*S_{COMM1}*, *S_{COMM2}*) est à un niveau logique haut, ou
- le rapport cyclique du signal PWM est le premier rapport cyclique et le signal de commande (*S_{COMM1}, S_{COMM2}*) est à un niveau à trois états, le niveau à trois états correspondant à une impédance élevée d'une broche de commande de l'agencement de commutation (215, 220, 225₁, 225₂) qui fournit ledit signal de commande (*S_{COMM1}*, *S_{COMM2}*),
d'où il résulte que la combinaison du signal de commande (*S_{COMM1}, S_{COMM2}*) avec le signal PWM aboutit à ladite première tension de pilotage, et
- afin de maintenir le dispositif électromécanique dans l'état activé, le rapport cyclique du signal PWM est le second rapport cyclique et le signal de commande (*S_{COMM1}, S_{COMM2}*) est au niveau à trois états, d'où il résulte que la combinaison du signal de commande (*S_{COMM1}*, *S_{COMM2}*) avec le signal PWM aboutit à ladite seconde tension de pilotage.

9. Procédé selon la revendication 8, comprenant en outre le réglage du signal de commande (*S_{COMM1}, S_{COMM2}*) à un niveau logique bas de manière à empêcher l'alimentation du signal PWM sur le dispositif électromécanique (210₁, 210₂), au niveau logique bas du signal de commande (*S_{COMM1}, S_{COMM2}*), le dispositif électromécanique (210₁, 210₂)étant commuté dans l'état désactivé.
